# FASCICULE DE BREVET EUROPEEN

(11) **EP 3 060 394 B1**
(45) Date de publication et mention de la délivrance du brevet: **24.06.2020**
(21) Numéro de dépôt: 14796819.2
(22) Date de dépôt: 15.10.2014
(51) Int. Cl.: B32B 17/10

(54) **VITRAGE POUR SYSTEME DE VISUALISATION**
VERGLASUNG FÜR ANZEIGESYSTEM
GLAZING FOR VISUALIZATION SYSTEM

(30) Priorité: 22.10.2013 FR 1360288
(43) Date de publication de la demande: 31.08.2016
(73) Titulaire: Sekisui Chemical Co., Ltd., Osaka-shi, Osaka 530-8565 (JP)
(72) Inventeur: CLABAU, Frédéric, F-49100 Angers (FR); LABROT, Michael, 52072 Aachen (DE); LEMAIRE, Marc, F-69100 Villeurbanne (FR); DUCLOS, Marie-Christine, F-69100 Villeurbanne (FR); METAY, Estelle, F-69120 Vaulx en Velin (FR)
(74) Mandataire: Ter Meer Steinmeister & Partner
(86) Numéro de dépôt international: PCT/FR2014/052625
(87) Numéro de publication internationale: WO 2015/059385

(56) Documents cités:
- WO-A1-2010/139889
- US-A1- 2012 276 651

## Description

La présente invention se rapporte au domaine des systèmes de visualisation utilisant des supports transparents en verre inorganique ou en matière plastique rigide, notamment les pare-brises automobile ou les vitrages pour bâtiment, en particulier les vitrines.

Tout particulièrement, même si elle n'y est pas limitée, la présente invention se rapporte au domaine des systèmes de visualisation dits tête haute, appelés HUD ou Head Up Display dans la technique. De tels systèmes sont utiles notamment dans les cockpits d'avion, les trains, mais également aujourd'hui dans les véhicules automobiles des particuliers (voitures, camions, etc.). Ces systèmes permettent notamment d'informer le conducteur du véhicule sans que celui-ci éloigne son regard du champ de vision en avant du véhicule, ce qui permet d'accroître grandement la sécurité.

Dans de tels systèmes, le vitrage est en général constitué d'une structure en sandwich, comprenant le plus simplement deux feuilles de matière rigide telles que des feuilles de verre. Les feuilles de matière rigide sont reliées entre elles par un feuillet intercalaire thermoplastique comprenant ou constitué par le plus souvent du polyvinylbutyral (PVB). Sans sortir du cadre de l'invention, notamment dans le domaine de l'aviation ou de vitrage dits de sécurité à propriétés antibalistique, le vitrage peut également être constitué à partir de feuilles de matière plastique rigide transparentes, par exemple en polycarbonate ou en PMMA, ou d'un assemblage d'une feuille de verre et d'une telle feuille de matière plastique rigide. Egalement, le vitrage selon l'invention peut comprendre une feuille de verre ou de matière plastique rigide transparente, notamment du type précité, et d'une feuille de matière plastique souple collée sur ladite feuille rigide. Par rigide, on entend que les caractéristiques mécaniques du substrat, sont adaptées à une utilisation du support en tant que vitrage bâtiment, pare-brise etc...

De la manière la plus classique, la visualisation d'informations dans la voiture s'obtient en projetant une image sur un pare-brise ayant une structure feuilletée, c'est à dire formé de deux feuilles de verre et d'un intercalaire en matière thermoplastique. Cependant le conducteur observe alors une image double : une première image réfléchie par la surface du pare-brise orientée vers l'intérieur de l'habitacle et une seconde image par réflexion sur la surface extérieure du pare-brise, ces deux images étant légèrement décalées l'une par rapport à l'autre. Ce décalage peut perturber la vision de l'information. Pour pallier ce problème, on peut citer la solution proposée dans le brevet US 5,013,134, dans lequel est décrit un système de visualisation tête haute utilisant un pare-brise feuilleté formé de deux feuilles de verre et d'un intercalaire en polyvinylbutyral (PVB) dont les deux faces extérieures ne sont pas parallèles mais en forme de coin, de sorte que l'image projetée par une source d'affichage et réfléchie par la face du pare-brise orientée vers l'habitacle soit pratiquement superposée à la même image provenant de la même source réfléchie par la face du pare-brise orientée vers l'extérieur. Pour supprimer l'image double, on réalise classiquement un vitrage feuilleté en forme de coin en utilisant une feuille intercalaire dont l'épaisseur décroît du bord supérieur du vitrage au bord inférieur. Cependant, il est nécessaire que le profil du PVB soit très régulier et ne présente pas de variations d'épaisseur, car ceux-ci se transmettent au cours de l'assemblage sur le pare-brise et conduisent à des variations locales d'angle.

Alternativement, il est proposé dans le brevet US 6,979,499 B2 d'envoyer un faisceau incident, de longueur d'onde appropriée, sur des luminophores directement intégrés dans le vitrage, susceptibles de répondre à l'excitation par l'émission d'une radiation lumineuse dans le domaine de la lumière visible. De cette façon, une image réelle et non plus virtuelle, est formée directement sur le pare-brise. Cette image est en outre visible par tous les passagers du véhicule. Le brevet US 6,979,499 B2 décrit en particulier un vitrage feuilleté avec un feuillet intercalaire du type polyvinylbutyral (PVB) dont les deux faces extérieures sont parallèles et dans lequel une couche de luminophores additionnelle est incorporée. Les luminophores sont choisis en fonction de la longueur d'onde du rayonnement d'excitation incident. Cette longueur d'onde se situe le plus souvent dans le domaine de l'UV-visible, en particulier entre 350 et 410 nm, plus rarement dans le domaine de l'IR. Les luminophores, sous cette radiation incidente, réémettent un rayonnement dans le domaine du visible. On parle de down conversion lorsque le rayonnement incident est l'UV, et d'up conversion lorsque le rayonnement incident est l'IR. Une telle construction permet selon ce document de restituer directement sur le pare-brise ou le vitrage une image de n'importe quel objet. Selon cette divulgation, des matériaux luminophores sont déposés sur au moins une portion de la surface d'un des feuillets constituant le vitrage feuilleté (PVB ou verre), sous la forme d'une couche continue comprenant éventuellement plusieurs types de luminophores. L'image recherchée est obtenue par l'excitation sélective d'une aire déterminée de la couche de luminophores. La localisation de l'image et sa forme sont obtenues au moyen d'une source d'excitation pilotée et modulée par des moyens extérieurs.

Les expériences menées par le demandeur ont montré que de tels dispositifs HUD, incorporant des luminophores dans le vitrage assemblé, se caractérisent par une luminance trop faible sous une source d'excitation UV conventionnellement non focalisée. Or, la concentration des luminophores est limitée par la valeur de flou et par la couleur du pare-brise, qui ne doivent pas être trop marquées pour ne pas gêner la vision du conducteur.

En particulier, il apparaît que l'intensité lumineuse obtenue avec de tels dispositifs reste encore très insuffisante lorsque la luminosité extérieure est forte, et d'une manière générale en vision diurne, puisqu'elle ne dépasse pas quelques dizaines de candelas. Typiquement, on a mesuré sur un système du type «HUD » classique, c'est-à-dire fonctionnant selon les principes de la réflexion, qu'un rayonnement monochromatique était visible d'un observateur, par exemple au niveau de la zone de vision du conducteur d'un véhicule, si la luminance était de l'ordre de plusieurs centaines de cd/m², notamment notablement supérieure à 500 cd/m², voire 1000 cd/m², dans des conditions normales d'éclairage extérieur diurne du pare-brise.

Pour obtenir une telle luminance, il est possible d'utiliser des sources excitatrices générant une lumière concentrée et dirigée, délivrée par des sources plus spécifiques du type diode éventuellement laser. Par concentré, il est entendu au sens de la présente description que la puissance surfacique, au niveau du vitrage, du faisceau issu de la source génératrice est supérieure à 120 mW.cm⁻² et de préférence comprise entre 200 mW.cm⁻² et 20 000 mW.cm⁻², voire comprise entre 500 mW.cm⁻² et 10 000 mW.cm⁻². Cependant, l'utilisation de telles sources ne peut être envisagée qu'à des puissances qui restent plafonnées, afin d'éviter les problèmes liés à la dangerosité du faisceau, notamment à l'extérieur du véhicule.

Un autre problème primordial lié à l'utilisation des sources concentrées en particulier de lumière laser tient au choix du luminophore utilisé : celui-ci doit présenter un rendement de conversion du rayonnement incident élevé mais ne doit pas se dégrader sous le rayonnement UV extérieur ni sous le rayonnement d'excitation incident notamment si celui-ci est du type laser, afin d'assurer à la fonction de visualisation une durée de vie convenable.

Dans un tel vitrage permettant la visualisation d'informations directement à sa surface, le choix du luminophore apparaît ainsi primordial et est nécessairement un compromis entre différentes caractéristiques et propriétés liées à une telle utilisation, parmi lesquelles les plus importantes sont :
- une forte luminance assurée par un fort rendement quantique sous le rayonnement d'excitation incident,
- une durabilité satisfaisante vis-à-vis du rayonnement d'excitation incident, notamment laser, tels que notamment mesurée par le temps observé avant que la luminance initiale soit réduite de moitié,
- une durabilité maximale vis-à-vis des rayonnements UV solaires incidents, telle que notamment mesurée par le test Arizona-WOM® dans le domaine,
- une transparence telle que la transmission lumineuse soit supérieure à 70%, telle que mesurée selon la norme ISO 9050 (2003),
- une compatibilité chimique avec le feuillet thermoplastique composant du vitrage,
- une coloration relativement neutre, notamment lorsque le luminophore est présent en forte concentration dans le vitrage, telle que par exemple mesurée par le test dit « Yellowness Index » selon la norme DIN 6167.

Pour résoudre l'ensemble des problèmes précédemment exposés, La demande WO2010/139889 décrit déjà l'utilisation d'un matériau luminophore du type hydroxy-téréphtalate, présentant une forte luminance du fait d'un très bon rendement quantique sous une excitation UV-visible incidente, et une bonne durabilité aux tests de vieillissement sous irradiation UV.

Si les composés décrits dans cette demande antérieure présentent de très bonnes propriétés générales, il demeure intéressant d'en augmenter encore les performances, notamment la luminance maximale du vitrage sous une excitation UV-visible. Une telle propriété est en effet un facteur-clé dans la technologie, les plus fortes luminances permettant bien évidemment une meilleure visualisation des informations affichées, notamment dans des conditions de forte illumination du vitrage.

La présente invention porte sur des vitrages comprenant des composés luminophores présentant des propriétés de luminances supérieures à celles décrites dans la demande WO2010/139889, tout en conservant les bonnes caractéristiques et propriétés liées à leur utilisation pour la visualisation d'informations reportées précédemment.

Plus précisément, la présente invention se rapporte à un vitrage pour la visualisation d'informations, en particulier pare-brise pour automobile ou vitrage pour bâtiment, comprenant un assemblage de deux feuilles transparentes, constituées de verre inorganique ou de matière plastique, les deux feuilles étant reliées entre elles par un intercalaire d'une matière thermoplastique ou adhésive ou par des feuillets multicouches incorporant un tel intercalaire, au moins un matériau luminophore permettant ladite visualisation étant en outre intégré audit vitrage.

Selon la présente invention, au moins un desdits matériaux luminophores comprend un noyau benzénique substitué au moins par :
- un premier groupement ester -COOR, dans lequel R est un groupement carboné linéaire ou ramifié comprenant une chaîne carbonée principale d'au moins six atomes de carbone liés entre eux consécutivement, ledit groupement R comprenant, si ladite chaîne est linéaire, plus de 10 atomes de carbone au total et, si ladite chaîne est ramifiée, au moins 7 atomes de carbone au total, et
- deux groupements hydroxyles -OH,

De préférence, le noyau benzénique est en outre substitué par un deuxième groupement -COOR', dans lequel R' est un autre groupement hydrocarboné ou l'hydrogène, ledit deuxième groupement étant de préférence en position para sur le noyau benzénique par rapport audit premier groupement ester.

Selon l'invention, le luminophore est intégré dans ledit intercalaire ou encore disposé entre celui-ci et l'une des feuilles transparentes ou encore intégré dans une éventuelle feuille transparente de matière plastique.

De préférence le luminophore est intégré dans l'intercalaire, notamment lorsque celui-ci est en PVB.

Selon certains modes avantageux mais non limitatifs de la présente invention, qui peuvent le cas échéant être combinés entre eux :
- Le luminophore comprend un noyau benzénique substitué par quatre groupements dont :
   - deux groupements ester respectivement -COOR et -COOR' ; R et R' étant des groupements carbonés linéaire ou ramifiés comprenant une chaîne carbonée principale d'au moins six atomes de carbone liés entre consécutivement, ledit groupement R' comprenant, si ladite chaîne est linéaire, plus de 10 atomes de carbone au total et, si elle est ramifiée, au moins 7 atomes de carbones au total, les deux groupements ester étant de préférence en position para sur le cycle benzénique,
   - deux groupements hydroxyles -OH, les deux groupements hydroxyles étant de préférence en position para sur le cycle benzénique.
- R et R' sont des groupements carbonés identiques.
- R et de préférence R' sont des groupements carbonés ramifiés comprenant au moins 8 atomes de carbone.
- R et de préférence R' sont des groupements carbonés linéaires comprenant plus de 10 atomes de carbone successifs, notamment entre 11 et 15 atomes de carbones successifs.
- Ledit luminophore est un dialkyl 2-5 dihydroxytéréphtalate répondant à la formule développée : 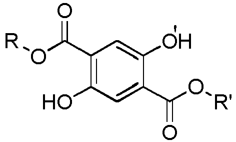
- Ledit luminophore est un dialkyl 2-5 dihydroxytéréphtalate répondant à la formule développée : 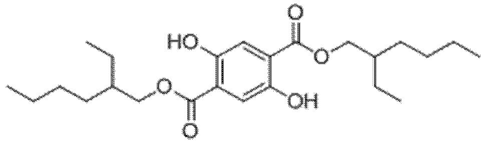
- Ledit luminophore est un dialkyl 2-5 dihydroxytéréphtalate répondant à la formule développée : 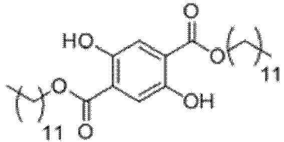
- L'intercalaire est en matière thermoplastique et ledit luminophore est dispersé dans ladite matière thermoplastique.
- La matière thermoplastique constituant ledit intercalaire est choisie dans le groupe des PVB, des PVC plastifiés, du polyuréthane PU ou des éthylènes vinyle acétate EVA. De préférence, la matière thermoplastique est un PVB.
- Le vitrage est un pare-brise automobile ou d'avion comprenant un assemblage de deux feuilles transparentes, constituées de verre inorganique ou de matière plastique résistante telle que du PMMA ou du polycarbonate reliées entre elles par un intercalaire d'une matière thermoplastique ou adhésive.
- Le vitrage est un vitrage pour bâtiment, notamment une vitrine, une allège ou une paroi ou cloison de séparation.

Selon un aspect de la présente invention, le vitrage selon l'invention est un pare-brise pour automobile. Un tel vitrage feuilleté est alors habituellement constitué par un ensemble de deux feuilles rigides en verre inorganique reliées par un intercalaire fait dans une matière thermoplastique.

Selon un mode de réalisation possible, les feuilles transparentes sont reliées entre elles par un feuillet multicouche intégrant une succession de couches PVB/PET/PVB, dans lequel PET est le polyéthylène téréphtalate.

Un vitrage feuilleté selon l'invention peut notamment être obtenu par un procédé dans lequel on dépose la couche mince de luminophores sur un des verres du vitrage ou sur l'intercalaire tel que le feuillet thermoplastique du type PVB, par une technique choisie parmi les techniques de sérigraphie, de spray, de rouleau, d'enduction, de jet d'encre ou encore les techniques du type offset, flexogravure ou encore héliogravure, sous la forme d'une solution contenant un solvant et éventuellement un liant polymère, puis on effectue le feuilletage du vitrage sous autoclave. Les luminophores peuvent également être introduits lors de la fabrication par extrusion du feuillet thermoplastique, généralement directement sous forme de poudre.

Typiquement dans un tel pare-brise selon l'invention, après l'étape de feuilletage, le luminophore selon l'invention est dispersé dans ladite matière thermoplastique.

Selon un autre aspect, le vitrage selon l'invention est un pare-brise pour aviation tel que décrit par exemple dans les publications EP0893340B1 ou WO2007/003849.

Selon un troisième aspect, le vitrage selon l'invention est un vitrage pour bâtiment, notamment une vitrine, une allège ou une paroi ou cloison de séparation permettant la visualisation d'informations au travers de celle-ci.

Sans sortir du cadre de l'invention et selon un quatrième aspect, le vitrage peut également être constitué d'une feuille de verre sur laquelle est collée, au moyen d'un intercalaire d'une matière adhésive par exemple une colle acrylique, une feuille de plastique souple, par exemple en polyester.

L'invention se rapporte enfin à un dispositif de visualisation d'une image sur un vitrage transparent, comprenant un vitrage feuilleté selon l'une des réalisations précédentes et une source génératrice de rayonnement UV-visible concentré du type laser dont le rayonnement est compris entre 350 et 410 nm, ledit rayonnement d'excitation étant dirigé vers la ou les zones du vitrage comprenant le luminophore.

Dans le dispositif de visualisation, la source génératrice de rayonnement UV-visible comprend typiquement au moins une diode laser émettant un rayonnement d'excitation UV-visible dont la longueur d'onde est inférieure à 410 nm et de préférence est de l'ordre de 405 nm.

Par exemple, la puissance surfacique du faisceau issu de la source génératrice est supérieure à 120 mW.cm⁻² et de préférence comprise entre 200 mW.cm⁻² et 20 000 mW.cm⁻², voire comprise entre 500 mW.cm⁻² et 10 000 mW.cm⁻².

De préférence, le dispositif de visualisation comprend en outre des moyens de modulation de la puissance de la source génératrice de rayonnement UV-visible, notamment afin d'adapter la luminance aux conditions d'éclairage extérieur du vitrage, par exemple en fonction des conditions d'ensoleillement du vitrage.

Par exemple les moyens de modulation peuvent définir au moins une puissance convenant pour une utilisation de jour et au moins une puissance inférieure à la précédente et convenant pour une utilisation de nuit.

L'invention et ses avantages seront mieux compris à la lecture du mode de réalisation qui suit d'un pare-brise feuilleté selon l'invention, en relation avec la figure unique jointe.

La figure jointe permet d'illustrer l'invention et ses avantages.

Sur cette figure, on a schématisé un pare-brise et un dispositif selon l'invention :
Le pare-brise 1 se compose de deux feuilles 2 et 9 typiquement en verre mais qui pourraient également être constituées de feuillets de matière plastique résistante du type polycarbonate. Entre les deux feuillets, est présent un feuillet intercalaire plastique 3 tel que du PVB (polyvinylbutyral), du PVC plastifié, PU ou EVA ou bien encore un feuillet thermoplastique multicouche incorporant par exemple du PET (polyéthylène téréphtalate), dont la succession des couches est par exemple PVB/PET/PVB.

Des particules de luminophore organique selon l'invention sont insérées au niveau du feuillet thermoplastique intercalaire 3 avant l'assemblage des différents feuillets, soit directement lors de l'extrusion de la feuille thermoplastique, soit grâce à un dépôt par une des techniques citées ci-dessus. Le dépôt est réalisé sur au moins une partie de la face interne de la feuille interne du vitrage ou sur au moins une partie de la face interne du feuillet thermoplastique.

Les particules de luminophore avant feuilletage présentent une répartition de taille majoritairement comprise entre 1 et 100 microns. Par majoritairement il est entendu que plus de 90% des particules composant la poudre commerciale ont un diamètre compris entre 1 et 100 microns.

Une source laser 4 émettant un rayonnement lumineux d'excitation est utilisée pour envoyer un rayonnement concentré incident 7 de longueur d'onde proche de 400 nm. Le luminophore 10, présent sous forme moléculaire dans le feuillet thermoplastique intercalaire 3 après feuilletage, présente un fort coefficient d'absorption du rayonnement incident. Il réémet donc un rayonnement intense dans le domaine visible

Le rayonnement visible émis par le luminophore est alors directement observable par l'œil 5 du conducteur, qui visualise ainsi l'objet sur le pare-brise sans avoir à quitter la route des yeux. De cette façon, une image peut être directement matérialisée sur un pare-brise feuilleté sans nécessiter d'adapter la structure de celui-ci, par exemple l'épaisseur du feuillet intercalaire, ce qui permet une fabrication économique des systèmes HUD.

La source utilisée pour générer le rayonnement concentré est par exemple une source UV-visible du type laser. Elle est par exemple mais non limitativement du type laser à solide, diode laser à semi-conducteurs, laser à gaz, laser à colorant, laser à excimère. De manière générale, toute source connue générant un flux concentré et dirigé, au sens de la présente invention, d'un rayonnement UV-visible peut être utilisée comme source d'excitation selon l'invention.

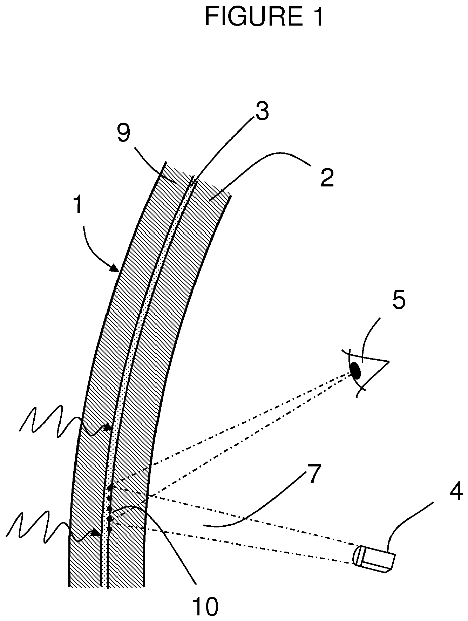

Selon un mode possible de réalisation, il est possible d'utiliser un projecteur DLP pour moduler l'onde excitatrice selon le mode décrit dans la demande US 2005/231652, paragraphe [0021]. Il est également possible selon l'invention d'utiliser comme source d'excitation UV-visible un dispositif tel que décrit dans la demande US2004/0232826, notamment tel que décrit en connexion avec la figure 3.

Comme indiqué précédemment, le luminophore peut être inséré dans le feuillet PVB lors de l'extrusion de celui-ci, ou bien il peut être déposé sur le verre ou le feuillet PVB par exemple par des techniques de sérigraphie, de spray, de rouleau, d'enduction, de jet d'encre ou encore par des techniques du type offset, flexogravure ou héliogravure.

De préférence, le dépôt par l'une des techniques précédentes est effectué après dissolution ou dispersion des particules de luminophores dans un solvant s'évaporant rapidement, et qui peut également contenir sous forme dissoute de la matière constitutive du feuillet thermoplastique, du PVB par exemple, pour faciliter l'incorporation du luminophore dans le feuillet thermoplastique lorsque celui-ci est lui-même en PVB.

Il a été trouvé par le demandeur que dans le cadre d'une application de visualisation d'une image au travers d'un vitrage transparent, l'utilisation de luminophores selon l'invention permet de répondre efficacement aux impératifs suivants, nécessaires à une telle application :
a) une netteté de l'image acceptable,
b) une intensité de luminescence suffisante pour qu'elle soit observable par le conducteur,
c) une transmission lumineuse supérieure à 70%.
Le mode de réalisation qui précède n'est bien évidemment en aucune façon limitatif de la présente invention, sous aucun des aspects précédemment décrits.

### Exemples :

Les exemples qui suivent permettent d'illustrer un exemple de réalisation d'un pare-brise feuilleté selon la présente invention et ses avantages par rapport à l'art antérieur.

Dans les exemples, on synthétise différents vitrages feuilletés comparatifs et selon la présente invention. Tous les vitrages comprennent la succession de deux feuilles de verre reliées par un feuillet intercalaire de PVB d'épaisseur 760 microns. L'assemblage est réalisé selon les techniques bien connues de l'art.

Préalablement au feuilletage, selon un carré de dimension environ 10 × 10 cm², différents luminophores, dont la formulation est donnée ci-après, sont déposés sur le verre par une technique de pulvérisation classique. Le luminophore est déposé sur la feuille de verre intérieure 2, sur sa face tournée vers le feuillet PVB avant l'étape d'assemblage (voir figure).

Plus précisément, on réalise au préalable une dilution du luminophore dans un solvant de type éthanol ou tétrahydrofurane (THF). La dilution est réalisée proche du maximum de solubilité du luminophore dans le solvant pour minimiser le volume de solution.

Le mélange est ensuite déposé par pulvérisation (spray) selon les techniques classiques sur la feuille de verre, de manière à obtenir, après séchage du solvant, un poids de matière sèche de l'ordre de 5 g par m² de verre.

On laisse ensuite le solvant s'évaporer, puis le feuilletage est réalisé avec les deux feuilles de verre et le feuillet PVB selon les techniques en autoclave classiques dans le domaine. On obtient ainsi un pare-brise tel que décrit sur la figure.

Sur les différents vitrages obtenus, on a mesuré les paramètres décrits précédemment selon les protocoles suivants :
Le flou a été mesuré selon la norme automobile Ansi Z26.1 (1996).

La résistance à la chaleur du vitrage a été réalisée conformément au test décrit dans la norme européenne ECE R43 A3/5.

Les intensités de luminescence absolues ont été mesurées par un spectromètre UV-visible et comparés entre elles en divisant l'intensité maximale de luminescence par la concentration moléculaire en luminophores, pour l'ensemble des molécules testées. Une intensité de référence 100 est attribuée au composé de référence selon l'exemple 1. Les émissions se situent dans des domaines de longueurs d'onde dans lesquels la sensibilité de l'œil humain varie grandement avec la longueur d'onde (avec notamment une sensibilité plus forte dans le vert-jaune). Les luminances relatives, tenant compte de l'efficacité lumineuse de l'œil humain en fonction de la longueur d'onde d'émission, sont également calculées sur la base des données précédentes, pour l'ensemble des molécules testées, pour une même concentration moléculaire.

La durabilité aux rayonnements UV solaires incidents a été mesurée par le test WOM Arizona ® qui consiste à exposer le vitrage à une radiation émise par une lampe à arc au Xénon pour simuler le rayonnement solaire selon la norme ISO 4892 (partie 2) à une température de 90°C. Une telle exposition permet un vieillissement accéléré du luminophore d'un facteur 10 environ. La mesure de la luminance au bout de 3000 heures d'exposition (correspondant donc sensiblement à 3 ans d'utilisation en condition réelles), rapportée à la luminance initiale, permet d'estimer et de comparer directement et simplement les propriétés de durabilité des différents luminophores sous rayonnement UV.

La coloration du vitrage a été mesurée par le test dit « Yellowness Index » selon la norme DIN 6167, après 400 heures d'exposition du vitrage au test Arizona précédemment décrit.

La durabilité sous le rayonnement laser d'excitation a été mesurée selon la méthode suivante :
On a dirigé un faisceau laser de puissance 200 mW et de longueur d'onde égale à 405 nm directement sur la partie du vitrage comprenant la couche de luminophore, sur une surface d'environ 2 mm². Un luminance-mètre est dirigé vers le spot de lumière émis et on mesure en continu la luminance en cd/m². On mesure ainsi le temps nécessaire pour que la luminance initiale soit réduite de moitié, cette valeur caractérisant selon l'invention la durabilité du luminophore sous le rayonnement concentré incident.

L'éclairement en continu par un spot immobile de grande puissance peut conduire à une dégradation rapide du luminophore et donc à une diminution rapide de sa luminance.

Les molécules testées répondent toutes à la formulation générale suivante:

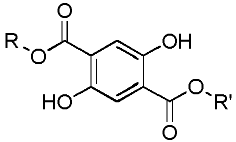

Elles sont obtenues par estérification de l'acide 2,5 dihydroxytéréphtalique par des alcools ROH pour les exemples 1 à 5, ou par réaction de l'acide avec l'acétal di-tert-butyle du N,N-diméthylformamide pour l'exemple 6.

Les molécules synthétisées sont :
- Exemple 1 (selon WO2010/139889): 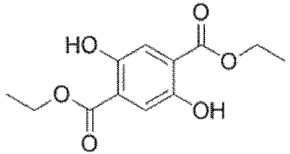
- Exemple 2 (selon WO2010/139889) : 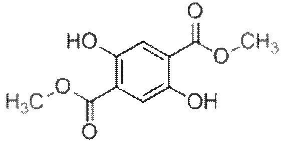
- Exemple 3 (comparatif) : 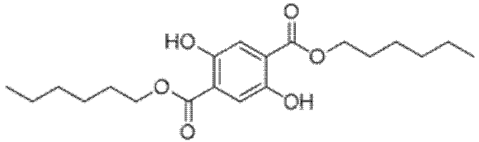
- Exemple 4 (selon l'invention) : 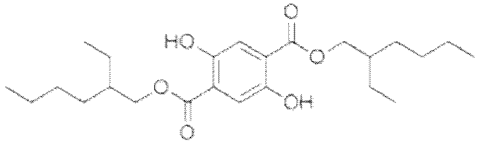
- Exemple 5 (selon l'invention) : 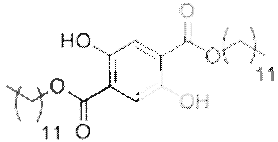
- Exemple 6 (comparatif) :

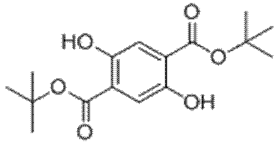

L'ensemble des résultats obtenus sont rassemblés dans le tableau 1 :

**Tableau 1**

| | Exemple 1 (référence) | Exemple 2 (référence) | Exemple 3 (comparatif) | Exemple 4 (invention) | Exemple 5 (invention) | Exemple 6 (comparatif) |
|---|---|---|---|---|---|---|
| Index de jaunissement (DIN 6167) après 400h | Pas de jaunissement | Pas de jaunissement | Pas de jaunissement | Pas de jaunissement | Pas de jaunissement | Pas de jaunissement |
| Résistance à la chaleur (ECE R43 A3/5) | conforme | conforme | conforme | conforme | conforme | conforme |
| Transmission lumineuse | >70% | >70% | >70% | >70% | >70% | >70% |
| Durabilité sous rayonnement UV (en % de la luminance initiale à 450 nm après 3000 h) | 100 | 100 | 100 | 100 | 100 | 70 |
| λ maximale d'émission (nm) sous faisceau laser (405 nm, 200 mW) | 450 nm | 450 nm | 450 nm | 450 nm | 450 nm | 450 nm |
| Couleur perçue | Bleu | Bleu | Bleu | Bleu | Bleu | Bleu |
| Luminance relative à 450 nm (λ_{exc} = 405 nm) | 100 | 95 | 100 | 130 | 180 | 95 |
| Durabilité sous excitation laser (405 nm, 200 mW) | > 100 heures | > 100 heures | > 100 heures | > 100 heures | > 100 heures | > 100 heures |

Les résultats reportés dans le tableau 1, par comparaison avec le luminophore de référence selon l'exemple 1, montrent que les propriétés de luminescence et de durabilité sous excitation laser sont proches pour tous les composés testés. Par ailleurs tous sont conformes aux tests de jaunissement et de résistance à la chaleur.

Les tests de vieillissement sous irradiation UV (Arizona) montrent également que tous les composés sont conformes, à l'exception du composé comparatif selon l'exemple 6, dont les chaînes hydrocarbonées R et R' sont des groupements ramifiés du type tert-butyl, non conformes à l'objet de l'invention.

Les mesures de luminance montrent que les composés selon l'invention, comprenant un groupement incorporant une chaîne linéaire carbonée d'au moins 6 atomes, présentent des valeurs de luminance, à concentration molaire identique, beaucoup plus élevées que les composés de référence, permettant une visualisation améliorée des informations affichées, notamment dans des conditions de forte illumination du vitrage.

Dans la description qui précède, la présente invention a été décrite en relation avec l'utilisation du vitrage sous excitation laser. Il est bien évident que la présente invention n'est pas limitée à ce mode d'excitation et que d'autres sources de rayonnement, notamment des diodes électroluminescentes de puissance, peuvent être utilisés comme source du rayonnement d'excitation, par exemple pour la visualisation de pictogrammes pré-imprimés sur ledit vitrage, tel que décrit dans les demandes WO2009/122094 ou FR2929017.

Egalement, l'invention concerne tout vitrage comprenant un luminophore selon l'invention éventuellement en mélange avec d'autres luminophores émettant éventuellement selon d'autres couleurs du spectre visible.

## Revendications

1. Vitrage pour la visualisation d'informations comprenant un assemblage de deux feuilles transparentes, constituées de verre inorganique ou de matière plastique, les deux feuilles étant reliées entre elles par un intercalaire d'une matière thermoplastique ou adhésive ou par des feuillets multicouches incorporant un tel intercalaire, au moins un matériau luminophore permettant ladite visualisation étant intégré audit vitrage, dans lequel au moins un desdits matériaux luminophores comprend un noyau benzénique substitué au moins par :
- au moins un premier groupement ester -COOR, dans lequel R est un groupement carboné linéaire ou ramifié comprenant une chaîne carbonée principale d'au moins six atomes de carbone liés entre eux consécutivement, ledit groupement R comprenant, si ladite chaîne est linéaire, plus de 10 atomes de carbone au total et, si ladite chaîne est ramifiée, au moins 7 atomes de carbone au total,
- deux groupements hydroxyles -OH, les deux groupements hydroxyles étant de préférence en position para sur le cycle benzénique.

2. Vitrage selon la revendication 1, dans lequel ledit noyau benzénique est substitué par un deuxième groupement -COOR', dans lequel R' est un autre groupement hydrocarboné ou l'hydrogène, ledit deuxième groupement étant de préférence en position para sur le noyau benzénique par rapport audit premier groupement ester.

3. Vitrage selon l'une des revendications précédentes dans lequel un desdits luminophores comprend un noyau benzénique substitué par quatre groupements dont :
- deux groupements ester respectivement -COOR et -COOR' ; R et R' étant des groupements carbonés linéaire ou ramifiés comprenant une chaîne carbonée principale d'au moins six atomes de carbone liés consécutivement, ledit groupement R' comprenant, si elle est linéaire, plus de 10 atomes de carbone au total et, si elle est ramifiée, au moins 7 atomes de carbones au total, les deux groupements ester étant de préférence en position para sur le cycle benzénique,
- deux groupements hydroxyles -OH, les deux groupements hydroxyles étant de préférence en position para sur le cycle benzénique.

4. Vitrage selon l'une des revendications précédentes, dans lequel R et R' sont des groupements carbonés identiques.

5. Vitrage selon l'une des revendications 1 à 3 dans lequel R et de préférence R' sont des groupements carbonés linéaires comprenant plus de 10 atomes de carbone successifs, notamment entre 11 et 15 atomes de carbones successifs.

6. Vitrage selon l'une des revendications précédentes, dans lequel ledit luminophore est un dialkyl 2-5 dihydroxytéréphtalate répondant à la formule développée :

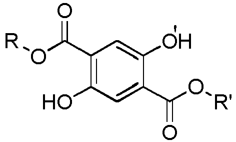

7. Vitrage selon l'une des revendications précédentes, dans lequel ledit luminophore est un dialkyl 2-5 dihydroxytéréphtalate répondant à la formule développée :

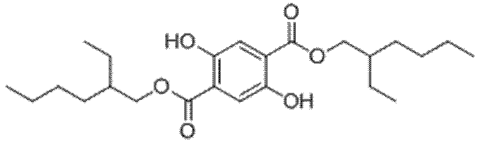

8. Vitrage selon l'une des revendications précédentes, dans lequel ledit luminophore est un dialkyl 2-5 dihydroxytéréphtalate répondant à la formule développée :

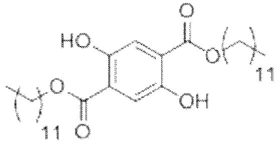

9. Vitrage selon l'une des revendications précédentes, dans lequel l'intercalaire est en matière thermoplastique et dans lequel ledit luminophore est dispersé dans ladite matière thermoplastique.

10. Vitrage selon l'une des revendications précédentes, dans lequel la matière thermoplastique constituant ledit intercalaire est choisie dans le groupe des PVB, des PVC plastifiés, du polyuréthane PU ou des éthylène vinyle acétate EVA.

11. Pare-brise automobile ou d'aviation constitué d'un vitrage selon l'une des revendications précédentes, comprenant un assemblage de deux feuilles transparentes, constituées de verre inorganique ou de matière plastique résistante telle que du PMMA ou du polycarbonate reliées entre elles par un intercalaire d'une matière thermoplastique ou adhésive.

12. Vitrage pour bâtiment, notamment une vitrine, une allège ou une paroi ou cloison de séparation, selon l'une des revendications précédentes.

13. Dispositif de visualisation d'une image sur un vitrage transparent, comprenant un vitrage selon l'une des revendications précédentes et une source génératrice de rayonnement d'excitation du type diode éventuellement laser dont le rayonnement est compris entre 350 et 410 nm, le rayonnement d'excitation étant dirigé vers la ou les zones du vitrage comprenant la couche de luminophore.

## Patentansprüche

1. Verglasung für die Anzeige von Informationen, die eine Anordnung aus zwei transparenten Lagen aus anorganischem Glas oder Kunststoff umfasst, wobei die beiden Lagen durch eine Zwischenschicht aus einem thermoplastischen oder klebenden Material oder durch Mehrschichtfolien, die eine solche Zwischenschicht enthalten, miteinander verbunden sind, wobei mindestens ein Leuchtstoffmaterial, das die Anzeige ermöglicht, in der Verglasung integriert ist, in der mindestens eines der Leuchtstoffmaterialien einen Benzolkern umfasst, der mindestens substituiert ist durch:
- mindestens eine erste Estergruppe -COOR, wobei R eine lineare oder verzweigte kohlenstoffhaltige Gruppe ist, die eine Kohlenstoffhauptkette mit mindestens sechs aufeinanderfolgend miteinander gebundenen Kohlenstoffatomen umfasst, wobei die Gruppe R, wenn die Kette linear ist, insgesamt mehr als 10 Kohlenstoffatome und, wenn die Kette verzweigt ist, insgesamt mindestens 7 Kohlenstoffatome umfasst,
- zwei Hydroxylgruppen -OH, wobei sich die beiden Hydroxylgruppen vorzugsweise in para-Stellung am Benzolring befinden.

2. Verglasung nach Anspruch 1, wobei der Benzolkern durch eine zweite Gruppe -COOR' substituiert ist, wobei R' eine andere Kohlenwasserstoffgruppe oder Wasserstoff ist, wobei sich die zweite Gruppe vorzugsweise in para-Stellung am Benzolkern in Bezug auf die erste Estergruppe befindet.

3. Verglasung nach einem der vorhergehenden Ansprüche, wobei einer der genannten Leuchtstoffe einen Benzolkern aufweist, der durch vier Gruppen substituiert ist, einschließlich:
- zwei Estergruppen -COOR bzw. -COOR'; wobei R und R' lineare oder verzweigte kohlenstoffhaltige Gruppen sind, die eine Kohlenstoffhauptkette mit mindestens sechs aufeinanderfolgend gebundenen Kohlenstoffatomen umfassen, wobei die Gruppe R', wenn sie linear ist, insgesamt mehr als 10 Kohlenstoffatome und, wenn sie verzweigt ist, insgesamt mindestens 7 Kohlenstoffatome umfasst, wobei sich die beiden Estergruppen vorzugsweise in para-Stellung am Benzolring befinden,
- zwei Hydroxylgruppen -OH, wobei sich die beiden Hydroxylgruppen vorzugsweise in para-Stellung am Benzolring befinden.

4. Verglasung nach einem der vorhergehenden Ansprüche, wobei R und R' identische Kohlenstoffgruppen sind.

5. Verglasung nach einem der Ansprüche 1 bis 3, wobei R und vorzugsweise R' lineare Kohlenstoffgruppen sind, die mehr als 10 aufeinanderfolgende Kohlenstoffatome, insbesondere zwischen 11 und 15 aufeinanderfolgende Kohlenstoffatome, umfassen.

6. Verglasung nach einem der vorhergehenden Ansprüche, wobei der Leuchtstoff ein Dialkyl-2-5-Dihydroxyterephthalat mit der folgenden Strukturformel ist:

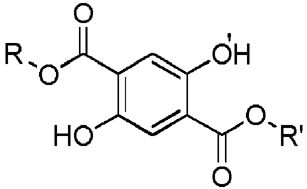

7. Verglasung nach einem der vorhergehenden Ansprüche, wobei der Leuchtstoff ein Dialkyl-2-5-Dihydroxyterephthalat mit der folgenden Strukturformel ist:

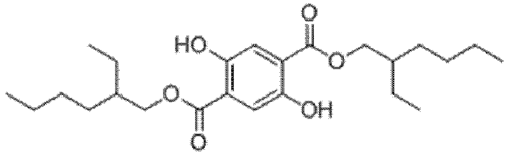

8. Verglasung nach einem der vorhergehenden Ansprüche, wobei der Leuchtstoff ein Dialkyl-2-5-Dihydroxyterephthalat mit der folgenden Strukturformel ist:

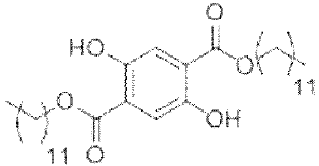

9. Verglasung nach einem der vorhergehenden Ansprüche, wobei die Zwischenschicht aus thermoplastischem Material hergestellt ist und wobei der Leuchtstoff in dem thermoplastischen Material dispergiert ist.

10. Verglasung nach einem der vorhergehenden Ansprüche, wobei das thermoplastische Material, aus dem die Zwischenschicht besteht, aus der Gruppe aus PVB, Weich-PVC, Polyurethan-PU oder Ethylen-Vinylacetat-EVA ausgewählt ist.

11. Windschutzscheibe für Kraftfahrzeuge oder Flugzeuge, bestehend aus einer Verglasung nach einem der vorhergehenden Ansprüche, umfassend eine Anordnung aus zwei transparenten Lagen, die aus anorganischem Glas oder widerstandsfähigem Kunststoff wie PMMA oder Polycarbonat bestehen und durch eine Zwischenschicht aus einem thermoplastischen oder klebenden Material miteinander verbunden sind.

12. Verglasung für ein Gebäude, insbesondere ein Schaufenster, eine Brüstung oder eine Wand oder Trennwand, nach einem der vorhergehenden Ansprüche.

13. Vorrichtung zur Anzeige eines Bildes auf einer transparenten Verglasung, die eine Verglasung nach einem der vorhergehenden Ansprüche und eine Quelle zur Erzeugung einer Anregungsstrahlung vom Diodentyp, gegebenenfalls eines Lasers, umfasst, deren Strahlung zwischen 350 und 410 nm liegt, wobei die Anregungsstrahlung auf den (die) die Leuchtstoffschicht enthaltende(n) Bereich(e) der Verglasung gerichtet ist.

## Claims

1. Glazing for displaying information, comprising an assembly of two transparent sheets which are made of inorganic glass or plastics material, the two sheets being interconnected by an insert made of a thermoplastic or adhesive material or by multilayer sheets incorporating such an insert, at least one phosphor material allowing said display being integrated into said glazing, wherein at least one of said phosphor materials comprises a benzene ring substituted at least by:
- at least a first ester group -COOR, in which R is a linear or branched carbon group comprising a main carbon chain of at least six carbon atoms bonded together consecutively, said group R comprising, if said chain is linear, more than 10 carbon atoms in total and, if said chain is branched, at least 7 carbon atoms in total,
- two hydroxyl groups -OH, the two hydroxyl groups preferably being in the para position on the benzene ring.

2. Glazing according to claim 1, wherein said benzene ring is substituted by a second group -COOR', in which R' is another hydrocarbon group or hydrogen, said second group preferably being in the para position on the benzene ring with respect to said first ester group.

3. Glazing according to either of the preceding claims, wherein one of said phosphors comprises a benzene ring substituted by four groups, namely:
- two ester groups, respectively -COOR and -COOR'; R and R' being linear or branched carbon groups comprising a main carbon chain of at least six carbon atoms bonded consecutively, said group R' comprising, if said chain is linear, more than 10 carbon atoms in total and, if said chain is branched, at least 7 carbon atoms in total, the two ester groups preferably being in the para position on the benzene ring,
- two hydroxyl groups -OH, the two hydroxyl groups preferably being in the para position on the benzene ring.

4. Glazing according to any one of the preceding claims, wherein R and R' are identical carbon groups.

5. Glazing according to any one of claims 1 to 3, wherein R and preferably R' are linear carbon groups comprising more than 10 successive carbon atoms, in particular between 11 and 15 successive carbon atoms.

6. Glazing according to any one of the preceding claims, wherein said phosphor is a dialkyl 2-5 dihydroxy terephthalate corresponding to the structural formula:

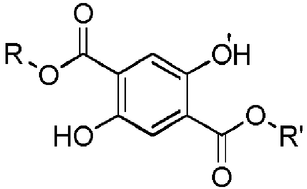

7. Glazing according to any one of the preceding claims, wherein said phosphor is a dialkyl 2-5 dihydroxy terephthalate corresponding to the structural formula:

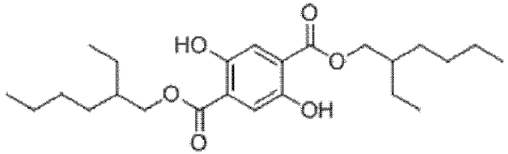

8. Glazing according to any one of the preceding claims, wherein said phosphor is a dialkyl 2-5 dihydroxy terephthalate corresponding to the structural formula:

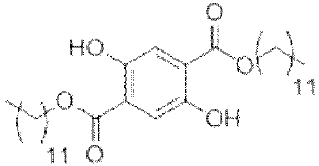

9. Glazing according to any one of the preceding claims, wherein the insert is made of thermoplastic material and wherein said phosphor is dispersed in said thermoplastic material.

10. Glazing according to any one of the preceding claims, wherein the thermoplastic material constituting said insert is selected from the groups of PVBs, plasticized PVCs, polyurethane PU or ethylene vinyl acetate EVA.

11. Automobile or aircraft windshield consisting of glazing according to any one of the preceding claims, comprising an assembly of two transparent sheets which are made of inorganic glass or of resistant plastics material such as PMMA or polycarbonate and are interconnected by an insert made of a thermoplastic or adhesive material.

12. Glazing for a building, in particular a window, an apron wall or a partition wall, according to any one of the preceding claims.

13. Device for displaying an image on transparent glazing, comprising glazing according to any one of the preceding claims and a source generating excitation radiation of the diode type, optionally laser, the radiation of which is between 350 and 410 nm, the excitation radiation being directed toward the zone or zones of the glazing comprising the phosphor layer.
